# EUROPÄISCHE PATENTSCHRIFT

(11) **EP 1 515 209 B1**
(45) Veröffentlichungstag und Bekanntmachung des Hinweises auf die Patenterteilung: **02.11.2006**
(21) Anmeldenummer: 04021712.7
(22) Anmeldetag: 13.09.2004
(51) Int. Cl.: G05B 19/414, B25J 9/16

(54) **Regeleinrichtung für einen mehrachsigen Roboter**
Controller for a multi-axis robot
Système de commande d'un robot multiaxial

(30) Priorität: 15.09.2003 DE 10342471
(43) Veröffentlichungstag der Anmeldung: 16.03.2005
(73) Patentinhaber: Dürr Systems GmbH, 70435 Stuttgart (DE)
(72) Erfinder: Meissner, Alexander, Dr., 70193 Stuttgart (DE); Wildermuth, Dietmar, Dr., 70193 Stuttgart (DE)
(74) Vertreter: Beier, Ralph

(56) Entgegenhaltungen:
- EP-A- 1 234 641
- WEDEWARD K ET AL: "Singularity robustness: methods for joint-space and task-space control" CONTROL APPLICATIONS, 1997., PROCEEDINGS OF THE 1997 IEEE INTERNATIONAL CONFERENCE ON HARTFORD, CT, USA 5-7 OCT. 1997, NEW YORK, NY, USA,IEEE, US, 5. Oktober 1997 (1997-10-05), Seiten 22-27, XP010250868 ISBN: 0-7803-3876-6

## Beschreibung

Die Erfindung betrifft eine Regeleinrichtung für einen mehrachsigen Roboter, insbesondere für einen Lackierroboter einer Lackieranlage, gemäß dem Oberbegriff des Anspruchs 1.

In modernen Lackieranlagen zur Lackierung von Kraftfahrzeugkarosserieteilen werden zur Führung eines Applikationsgerätes, wie beispielsweise eines Rotationszerstäubers, herkömmlicherweise mehrachsige Lackierroboter eingesetzt, die eine schnelle, flexible und genaue Führung des Applikationsgerätes ermöglichen und dadurch zu einem guten Lackierergebnis beitragen.

Bei der Ansteuerung eines derartigen Lackierroboters werden herkömmlicherweise die gewünschten Raumkoordinaten eines sogenannten TCP (engl. TCP - Tool Center Point) vorgegeben und entsprechend einer roboterspezifischen inversen Kinematik in die zugehörigen Achsenkoordinaten für die einzelnen Achsen des Lackierroboters umgerechnet. Der Antrieb der einzelnen Achsen des Lackierroboters erfolgt hierbei durch Elektromotoren, die durch jeweils einen Regler für die einzelnen Achsen geregelt werden.

Nachteilig an der vorstehend beschriebenen bekannten Regeleinrichtung für einen Roboter ist die Tatsache, dass die Positionierungsgenauigkeit insbesondere bei schnellen Bewegungen des Roboters unbefriedigend ist.

Aus EP 1 234 641 A1 ist eine Regeleinrichtung für einen Roboter bekannt, bei dem die Regler unterschiedlicher Achsen achsenübergreifend miteinander gekoppelt sind. Im Rahmen der achsenübergreifenden Kopplung wird in einer Achse ein IST-Wert gemessen und bei der Regelung in einer anderen Achse berücksichtigt.

Weitere regelungstechnische Ansätze sind bekannt aus Wedeward, K. et al: "Singularity Robustness: Methods or jointspace and task-space control", Proceedings of the 1997, IEEE International Conference on Control Application Hartford, CT, October 5-7, 1997.

Der Erfindung liegt deshalb die Aufgabe zugrunde, bei einer Regeleinrichtung für einen mehrachsigen Roboter die Positionierungsgenauigkeit zu erhöhen.

Diese Aufgabe wird, ausgehend von der vorstehend beschriebenen bekannten Regeleinrichtung gemäß dem Oberbegriff des Anspruchs 1, durch die kennzeichnenden Merkmale des Anspruchs 1 gelöst.

Die Erfindung beruht auf der technischen Erkenntnis, dass die Positionierungsgenauigkeit eines mehrachsigen Roboters durch die Elastizität der einzelnen Achsen beeinträchtigt wird. Falls beispielsweise eine Achse des Roboters aufgrund eines zwischengeschalteten Getriebes sehr elastisch ist, so spricht diese Achse auf eine Sollwertänderung nur verzögert an, wohingegen steifere Achsen des Roboters der Sollwertänderung schneller folgen. Das verzögerte Ansprechen hochelastischer Achsen wird jedoch bei der bisherigen Regelung nicht berücksichtigt und führt deshalb zu Positionierungsfehlern des Roboters.

Die Erfindung umfasst deshalb die allgemeine technische Lehre, bei einer Regeleinrichtung mit mehreren Reglern zur Antriebsregelung jeweils einer Achse des mehrachsigen Roboters die einzelnen Reglerachsen achsenübergreifend miteinander zu koppeln, damit unterschiedliche Elastizitäten der einzelnen Achsen berücksichtigt und in den anderen Achsen kompensiert werden können.

Vorzugsweise wirkt die achsenübergreifende Kopplung zwischen den einzelnen Reglern hierbei von dem Regler einer relativ nachgiebigen Achse auf den Regler einer relativ steifen Achse. Dies ist vorteilhaft, da die elastizitätsbedingten Positionierungsfehler im wesentlichen durch die nachgiebigen Achsen verursacht werden und deshalb von den steiferen Achsen kompensiert werden sollten.

Erfindungsgemäß betrifft die achsenübergreifende Kopplung zwischen den einzelnen achsenbezogenen Reglern des mehrachsigen Roboters eine Regelabweichung mindestens eines der Regler. Dies bedeutet, dass in einer Achse des Roboters die Regelabweichung erfasst und in einer anderen Achse berücksichtigt wird.

Beispielsweise kann hierbei in einem achsenbezogenen Regler die Regelabweichung eines Drehmomentreglers erfasst und auf einen oder mehrere andere achsenbezogene Regler zurückgekoppelt werden. Die Verwendung der Regelabweichung eines der Drehmomentregler zur achsenübergreifenden Kopplung ist sinnvoll, da diese Reglergröße die Elastizität der jeweiligen Achse widerspiegelt, die im Rahmen der achsenübergreifenden Kopplung kompensiert werden soll.

Die Erfindung ist jedoch hinsichtlich der im Rahmen der achsenübergreifenden Kopplung zu berücksichtigenden Reglergröße nicht auf Soll-Ist-Abweichungen des Drehmoments beschränkt, sondern auch mit anderen Reglergrößen realisierbar.

So wird bei einem mehrachsigen Roboter mit jeweils linear beweglichen Achsen vorzugsweise die Soll-Ist-Abweichung eines Kraftreglers auf die Regler der anderen Achsen des mehrachsigen Roboters zurückgekoppelt.

Bei der erfindungsgemäßen Regeleinrichtung ist also das Regelverhalten des Reglers mindestens einer Achse nicht nur von der Soll-Ist-Abweichung der eigenen Achse abhängig, sondern wird aufgrund der achsenübergreifenden Kopplung vorzugsweise auch von der Soll-Ist-Abweichung einer anderen Achse beeinflusst.

Vorzugsweise erfolgt die achsenübergreifende Kopplung zwischen den einzelnen Achsen durch eine Kopplungsschleife, die eingangsseitig die Soll-Ist-Abweichung einer Reglergröße (z.B. des Drehmoments) an einer Achse erfasst und ausgangsseitig den Regler einer anderen Achse ansteuert.

Hierbei ist in der Kopplungsschleife vorzugsweise ein Tiefpassfilter, ein Absolutwertglied, ein Inverter, ein Verstärker und/oder ein Sättigungsglied angeordnet.

Die Anordnung eines Tiefpassfilters in der Kopplungsschleife ist sinnvoll, um höherfrequente Störsignale auszufiltern, die nicht durch die Elastizität der jeweiligen Achse verursacht werden.

Weiterhin ist es vorteilhaft, in der Kopplungsschleife ein Absolutwertglied anzuordnen, da die Elastizität der jeweiligen Achse normalerweise richtungsunabhängig ist, so dass das Vorzeichen der zurückgekoppelten Reglergröße unbeachtlich ist.

Ferner kann es vorteilhaft sein, wenn in der Kopplungsschleife zwischen den miteinander gekoppelten Reglern ein Sättigungsglied angeordnet ist, um das Stellverhalten der Regeleinrichtung zu optimieren.

Im Rahmen der Erfindung ist es möglich, dass nur zwei achsenbezogene Regler miteinander gekoppelt sind. Vorzugsweise ist jedoch der Regler einer Achse achsenübergreifend auf die Regler aller anderen Achsen zurückgekoppelt oder zumindest auf die Regler mehrerer anderer Achsen.

Vorzugsweise ist mindestens einer der Regler hierbei ein Kaskadenregler, der mehrere kaskadenförmige Regelkreise aufweist, wobei die achsenübergreifende Kopplung auf einen oder mehrere der äußeren Regelkreise wirkt. Beispielsweise kann der Kaskadenregler Positions-, Geschwindigkeits-, Drehmoment- und Stromregelkreise aufweisen, die ineinander verschachtelt sind, wobei die Kopplung zwischen den achsenbezogenen Reglern auf einen oder mehrere der äußeren Regelkreise wirkt. Beispielsweise kann die von einem Regler abgegriffene Drehmoment-Regelabweichung bei dem Regler einer anderen Achse den Sollwert der Positionsregelschleife und/oder den Sollwert der Geschwindigkeitsregelschleife beeinflussen.

In einer vorteilhaften Variante der Erfindung ist ferner eine Konfigurierbarkeit der Kopplung zwischen den einzelnen Achsen vorgesehen. Beispielsweise kann frei konfiguriert werden, welcher Regler achsenübergreifend auf welchen anderen achsenbezogenen Regler wirkt. Darüber hinaus kann auch das Kopplungsverhalten zwischen den einzelnen achsenbezogenen Reglern frei konfiguriert werden, wobei sich das Kopplungsverhalten für die einzelnen achsenbezogenen Regler unterscheiden kann. Die Erfindung betrifft jedoch nicht nur die vorstehend beschriebene erfindungsgemäße Regeleinrichtung, sondern auch einen Roboter, insbesondere einen Lackierroboter mit einer derartigen Lackiereinrichtung sowie eine Beschichtungsanlage mit einem erfindungsgemäß ausgestatteten Roboter.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: eine erfindungsgemäße Regeleinrichtung für einen mehrachsigen Lackierroboter mit jeweils einem Regler für die einzelnen Achsen,
- Figur 2: ein regelungstechnisches Ersatzschaltbild des Reglers der beiden relativ steifen Achsen 1 und 2 sowie
- Figur 3: den Regler der relativ elastischen Achse 3 in Form eines regelungstechnischen Ersatzschaltbildes.

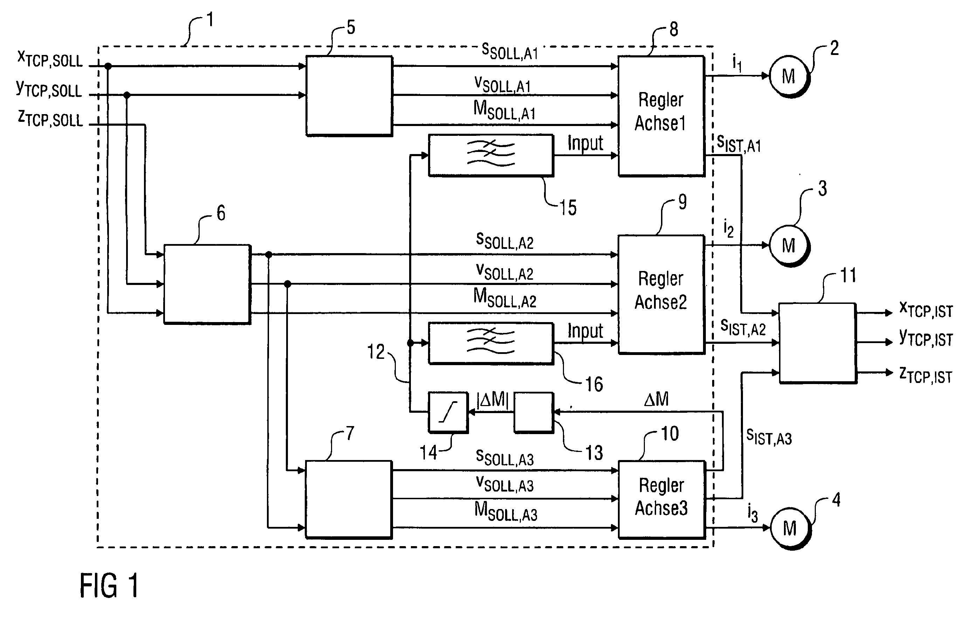

Das vereinfachte Blockschaltbild in Figur 1 zeigt eine erfindungsgemäße Regeleinrichtung 1 zur elektrischen Ansteuerung von Elektromotoren 2, 3, 4 eines mehrachsigen Roboters, der beispielsweise als Lackierroboter eingesetzt werden kann, um ein Applikationsgerät, wie beispielsweise einen Rotationszerstäuber, in einer Lackierkabine einer Beschichtungsanlage zu positionieren. Zur Vereinfachung sind hierbei lediglich drei Elektromotoren 2-4 dargestellt, was einem dreiachsigen Roboter entspricht. Die Erfindung ist jedoch nicht auf die Ansteuerung dreiachsiger Roboter beschränkt, sondern wird vorzugsweise zur Ansteuerung mehrachsiger Roboter eingesetzt.

Eingangsseitig erhält die Regeleinrichtung 1 als Sollwerte Raumkoordinaten x_{TCP, SOLL}, y_{TCP,SOLL} und z_{TCP,SOLL} eines sogenannten TCP (TCP - Tool Center Point), welche den gewünschten Bahnverlauf eines an dem TCP montierten Applikationsgerätes bestimmen.

Aus den Raumkoordinaten x_{TCP,SOLL}, y_{TCP,SOLL} und z_{TCP,SOLL} berechnen mehrere Recheneinheiten 5, 6, 7 entsprechend einer vorgegebenen inversen Kinematik die zugehörigen Soll-Werte s_{SOLL}, v_{SOLL}, M_{SOLL} für die Position, die Geschwindigkeit und das Drehmoment in den einzelnen Achsen des Roboters.

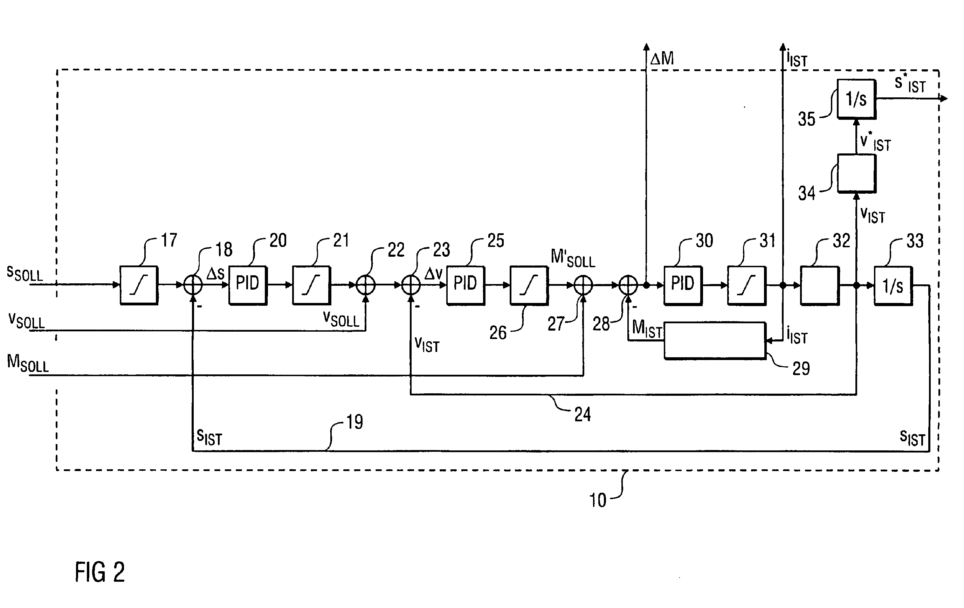

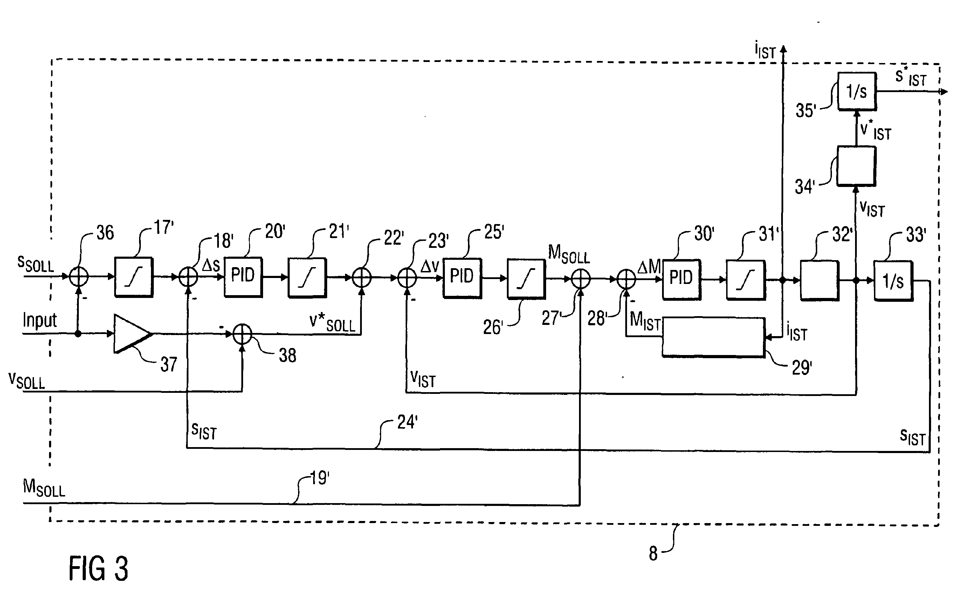

Diese Sollwerte werden dann jeweils einem achsenbezogenen Regler 8, 9, 10 zugeführt, wobei die Regler 8-10 detailliert in den Figuren 2 bzw. 3 dargestellt sind und noch detailliert beschrieben werden. Die Regler 8-10 regeln den Strom I₁, I₂ bzw. I₃ zur Ansteuerung der Elektromotoren 2-4 in den einzelnen Achsen.

Weiterhin zeigt Figur 1 im Rahmen des dargestellten regelungstechnischen Ersatzschaltbildes eine weitere Recheneinheit 11, die aus den von den Reglern 8-10 intern berechneten Ist-Werten für die Position der jeweiligen Achse die zugehörigen Ist-Werte für die Position des TCP berechnen. Die Recheneinheit 11 ist jedoch nicht Bestandteil der erfindungsgemäßen Regeleinrichtung, sondern dient hier lediglich zur Verdeutlichung des erfindungsgemäßen Prinzips.

Von besonderer Bedeutung ist bei der erfindungsgemäßen Regeleinrichtung 1, dass die einzelnen achsenbezogenen Regler 8-10 nicht unabhängig voneinander arbeiten, sondern untereinander gekoppelt sind. So wird von dem Regler 10 für die elastischste Achse des Roboters die Regelabweichung ΔM zwischen Ist-Wert und Soll-Wert des Drehmoments M abgegriffen und im Rahmen einer Rückkopplungsschleife 12 auf den Eingang der Regler 8, 9 der steiferen Achsen des Roboters zurückgeführt. Die Rückkopplungsschleife 12 ermöglicht hierbei eine Kompensation des elastizitätsbedingten verzögerten Ansprechens der dem Regler 10 zugeordneten Achse durch die von den Reglern 8, 9 angesteuerten steiferen Achsen.

In der Rückkopplungsschleife 12 ist zunächst ein Absolutwertglied 13 angeordnet, das den Absolutwert der Regelabweichung ΔM berechnet, da das Vorzeichen der Regelabweichung ΔM für das elastizitätsbedingte verzögerte Ansprechverhalten unbedeutend ist.

Darüber hinaus ist in der Rückkopplungsschleife 12 hinter dem Absolutwertglied 13 noch ein Sättigungsglied 14 angeordnet, das die Regelabweichung ΔM in der Rückkopplungsschleife 12 begrenzt.

Die Rückkopplungsschleife 12 verzweigt dann hinter dem Sättigungsglied 14 in zwei getrennte Zweige, die den einzelnen Reglern 8, 9 zugeführt werden, wobei in den beiden getrennten Zweigen der Rückkopplungsschleife 12 jeweils ein Tiefpassfilter 15, 16 angeordnet ist. Die beiden Tiefpassfilter 15, 16 haben die Aufgabe, höherfrequente Störsignale aus der Rückkopplungsschleife 12 auszufiltern.

Im Folgenden werden nun anhand von Figur 2 Aufbau und Funktion des Reglers 10 beschrieben, wobei darauf hinzuweisen ist, dass der Regler 10 die elastischste Achse des mehrachsigen Roboters regelt.

Eingangsseitig nimmt der Regler 10 von der Recheneinheit 7 die Sollwerte s_{SOLL}, v_{SOLL} und M_{SOLL} für Position, Geschwindigkeit und Drehmoment der dritten Achse auf.

Der Sollwert s_{SOLL} für die Positionen der dritten Achse wird zunächst einem Begrenzer 17 zugeführt, der den Sollwert S_{SOLL} begrenzt und einem Subtrahierer 18 zuführt. Der Subtraktionseingang des Subtrahierers 18 ist mit einer Rückkopplungsschleife 19 verbunden, welche die Ist-Position S_{IST} der dritten Achse zurück führt, wie noch detailliert beschrieben wird.

Ausgangsseitig ist der Subtrahierer 18 mit einem PID-Regler 20 verbunden, dem ein Begrenzer 21 nachgeschaltet ist.

Ausgangsseitig ist der Begrenzer 21 mit einem Addierer 22 verbunden, der den von dem Begrenzer 21 ausgegebenen Soll-Wert für die Geschwindigkeit der dritten Achse zu dem eingangsseitigen aufgenommenen Sollwert v_{SOLL} der Geschwindigkeit addiert und einem Subtrahierer 23 zuführt.

Der Subtraktionseingang des Subtrahierers 23 ist wiederum mit einer Rückkopplungsschleife 24 verbunden, welche den Ist-Wert der Geschwindigkeit v_{IST} der dritten Achse zurück führt, wie ebenfalls noch detailliert beschrieben wird.

Ausgangsseitig führt der Subtrahierer 23 die Regelabweichung Δv einem PID-Regler 25 zu, dem ein weiterer Begrenzer 26 nachgeschaltet ist. Am Ausgang des Begrenzers 26 erscheint dann ein Soll-Wert M'_{SOLL} für das Drehmoment des Elektromotors 4 in der dritten Achse, wobei dieser Soll-Wert von einem Addierer 27 zu dem eingangsseitig aufgenommenen Soll-Wert M_{SOLL} addiert und anschließend einem Subtrahierer 28 zugeführt wird.

Der Subtraktionseingang des Subtrahierers 28 ist mit einem in einer Rückkopplungsschleife angeordneten Übertragungsglied 29 verbunden, so dass der Subtrahierer 28 die Regelabweichung ΔM der Drehmoment-Regelschleife abgibt.

Hinter dem Subtrahierer 28 ist ein weiterer PID-Regler 30 sowie ein Begrenzer 31 angeordnet, so dass am Ausgang des Begrenzers 31 der Wert des Stroms i_{IST} erscheint, mit dem der Elektromotor 4 der dritten Achse angesteuert wird.

In dem reglungstechnischen Ersatzschaltbild des Reglers 10 ist hinter dem Begrenzer 31 ein Übertragungsglied 32 angeordnet, das aus dem Stromwert i_{IST} den zugehörigen Geschwindigkeitswert v_{IST} berechnet.

Für die Rückkopplung des Ist-Wertes s_{IST} in der Rückkopplungsschleife 19 ist ein weiteres Übertragungsglied 33 vorgesehen, das aus der Geschwindigkeit v_{IST} die zugehörige Position s_{IST} berechnet.

Weiterhin zeigt das reglungstechnische Ersatzschaltbild des Reglers 10 zwei Übertragungsglieder 34, 35, die unter Berücksichtigung der Elastizität der dritten Achse die zugehörigen, elastizitätsbereinigten Werte der Geschwindigkeit v*_{IST} und der Position s*_{IST} berechnen.

Wichtig ist hierbei, dass aus dem Regler 10 über die elastischste Achse des mehrachsigen Roboters als Rückkopplungsgröße die Regelabweichung ΔM der Drehmomentschleife abgegriffen wird.

Im Folgenden werden nun anhand von Figur 3 Aufbau und Funktion der beiden Regler 8, 9 der steiferen Achsen des mehrachsigen Roboters beschrieben, wobei die Regler 8, 9 bis auf die Möglichkeit einer unterschiedlichen Konfigurierung baugleich sind, so dass auf eine separate Beschreibung verzichtet werden kann.

Darüber hinaus stimmen die Regler 8, 9 weitgehend mit dem Regler 10 überein, so dass zur Vermeidung von Wiederholungen weitgehend auf die vorstehende Beschreibung des Reglers 10 verwiesen wird und im Folgenden für entsprechende Bauteile dieselben Bezugszeichen verwendet werden, die lediglich zur Unterscheidung durch ein Apostroph gekennzeichnet sind.

Eine Besonderheit des Reglers 8 besteht darin, dass dieser über die Rückkopplungsschleife 12 eingangsseitig eine Korrekturgröße Input aufnimmt, die einem zusätzlichen Subtrahierer 36 zugeführt wird.

Der Subtrahierer 36 bildet die Differenz zwischen dem eingangsseitig aufgenommenen Sollwert S_{SOLL} für die Position der ersten Achse und der eingangsseitig aufgenommenen Korrekturgröße Input und verwendet die Differenz nachfolgend als Führungsgröße.

Darüber hinaus wird die eingangsseitig aufgenommene Korrekturgröße Input über einen Verstärker 37 einem weiteren Subtrahierer 38 zugeführt, der die Differenz zwischen dem eingangsseitig aufgenommenen Sollwert v_{SOLL} für die Geschwindigkeit der ersten Achse und dem eingangsseitig aufgenommenen Korrekturwert Input bildet, wobei der Subtrahierer 38 eine entsprechend korrigierte Führungsgröße v*_{SOLL} berechnet, die dem Addierer 22' zugeführt wird, wie vorstehend zu Figur 2 beschrieben wird.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

## Patentansprüche

1. Regeleinrichtung (1) für einen mehrachsigen Roboter, insbesondere für einen Lackierroboter einer Lackieranlage, mit mehreren Reglern (8-10) zur Antriebsregelung jeweils einer Achse des Roboters, wobei mindestens zwei Regler (8-10) unterschiedlicher Achsen achsenübergreifend miteinander gekoppelt sind, **dadurch gekennzeichnet, dass** die achsenübergreifende Kopplung zwischen den Reglern (8-10) eine Regelabweichung (ΔM) eines der Regler (10) betrifft, indem die Regelabweichung (ΔM) eines der Regler (10) erfasst und auf einen oder mehrere andere achsenbezogene Regler (8, 9) zurückgekoppelt wird.

2. Regeleinrichtung (1) nach Anspruch 1, **dadurch gekennzeichnet, dass** die einzelnen Achsen des Roboters eine unterschiedliche mechanische Steifigkeit aufweisen, wobei die achsenübergreifende Kopplung von dem Regler (10) einer relativ nachgiebigen Achse auf den Regler (8, 9) einer relativ steifen Achse wirkt.

3. Regeleinrichtung (1) nach einem der vorhergehenden Ansprüche, **dadurch gekennzeichnet, dass** die achsenübergreifende Kopplung zwischen den Reglern (8-10) die Regelabweichung (ΔM) eines Drehmomentreglers betrifft.

4. Regeleinrichtung (1) nach einem der vorhergehenden Ansprüche, **dadurch gekennzeichnet, dass** zur achsenübergreifenden Kopplung zwischen den Reglern (8-10) mindestens eine Kopplungsschleife (12) vorgesehen ist, wobei in der Kopplungsschleife ein Tiefpassfilter (15, 16), ein Absolutwertglied (13), ein Inverter, ein Verstärker und/oder ein Sättigungsglied (14) angeordnet ist.

5. Regeleinrichtung (1) nach einem der vorhergehenden Ansprüche, **dadurch gekennzeichnet, dass** der Regler (10) einer Achse achsenübergreifend auf die Regler (8, 9) aller anderen Achsen zurückgekoppelt ist.

6. Regeleinrichtung (1) nach einem der vorhergehenden Ansprüche, **dadurch gekennzeichnet, dass** mindestens einer der Regler (8-10) ein Kaskadenregler ist, der mehrere kaskadenförmige Regelkreise aufweist, wobei die achsenübergreifende Kopplung auf einen oder mehrere der äußeren Regelkreise wirkt.

7. Regeleinrichtung (1) nach einem der vorhergehenden Ansprüche, **dadurch gekennzeichnet, dass** konfigurierbar ist, welche Regler (8-10) achsenübergreifend miteinander gekoppelt sind.

8. Regeleinrichtung (1) nach einem der vorhergehenden Ansprüche, **dadurch gekennzeichnet, dass** das Kopplungsverhalten zwischen den einzelnen Reglern (8-10) konfigurierbar ist.

9. Regeleinrichtung (1) nach einem der vorhergehenden Ansprüche, **dadurch gekennzeichnet, dass** die achsenübergreifende Kopplung zwischen den Reglern (8-10) eine antriebsseitig erfasste Reglergröße (ΔM) betrifft.

10. Roboter, insbesondere Lackierroboter, mit einer Regeleinrichtung (1) nach einem der vorhergehenden Ansprüche.

11. Verwendung eines Roboters nach Anspruch 10 in einer Beschichtungsanlage.

## Claims

1. Control device (1) for a multiaxial robot, in particular for a painting robot of a painting installation, with a plurality of controllers (8 to 10) for drive control of a respective axis of the robot, wherein at least two controllers (8 to 10) with different axes are coupled to one another with overlapping axes, **characterised in that** the axially overlapping coupling between the controllers (8 to 10) relates to a deviation from control (ΔM) of one of the controllers (10), as the deviation of control (ΔM) of one of the controllers (10) is detected and coupled back to one or more other axis-related controllers (8, 9).

2. Control device (1) as claimed in Claim 1, **characterised in that** the individual axes of the robot have a different mechanical rigidity, wherein the axially overlapping coupling of the controller (10) of a relatively flexible axis acts on the controller (8, 9) of a relatively rigid axis.

3. Control device (1) as claimed in any one of the preceding claims, **characterised in that** the axially overlapping coupling between the controllers (8 to 10) relates to the deviation from control (ΔM) of a torque controller.

4. Control device (1) as claimed in any one of the preceding claims, **characterised in that** for axially overlapping coupling between the controllers (8 to 10) at least one coupling loop (12) is provided, wherein a low-pass filter (15, 16), an absolute value element (13), an inverter, an amplifier and/or a saturation element (14) is disposed in the coupling loop.

5. Control device (1) as claimed in any one of the preceding claims, **characterised in that** the controller (10) of an axis is coupled back with overlapping axes to the controllers (8, 9) of all other axes.

6. Control device (1) as claimed in any one of the preceding claims, **characterised in that** at least one of the controllers (8 to 10) is a cascade controller which has a plurality of cascade-like control circuits, wherein the axially overlapping coupling acts on one or more of the external control circuits.

7. Control device (1) as claimed in any one of the preceding claims, **characterised in that** it is possible to configure which controllers (8 to 10) are coupled with one another with overlapping axes.

8. Control device (1) as claimed in any one of the preceding claims, **characterised in that** the coupling behaviour between the individual controllers (8 to 10) is configurable.

9. Control device (1) as claimed in any one of the preceding claims, **characterised in that** the axially overlapping coupling between the controllers (8 to 10) relates to a controller variable (ΔM) detected on the drive side.

10. Robot, in particular a painting robot, with a control device (1) as claimed in any one of the preceding claims.

11. Use of a robot as claimed in Claim 10 in a coating installation.

## Revendications

1. Dispositif de réglage (1) pour un robot multiaxial, en particulier pour un robot de laquage d'une installation de laquage, avec plusieurs régulateurs (8-10) pour le réglage de l'entraînement de respectivement un axe du robot, au moins deux régulateurs (8-10) de différents axes étant couplés entre eux avec chevauchement d'axes, **caractérisé en ce que** le couplage avec chevauchement d'axes entre les régulateurs (8-10) concerne un écart de réglage (ΔM) de l'un des régulateurs (10) du fait que l'écart de réglage (ΔM) de l'un des régulateurs (10) est enregistré et est réinjecté sur un ou plusieurs autres régulateurs (8, 9) spécifiques aux axes.

2. Dispositif de réglage (1) selon la revendication 1, **caractérisé en ce que** les axes individuels du robot présentent une rigidité mécanique différente, le couplage avec chevauchement d'axes du régulateur (10) d'un axe relativement souple agissant sur le régulateur (8, 9) d'un axe relativement rigide.

3. Dispositif de réglage (1) selon l'une quelconque des revendications précédentes, **caractérisé en ce que** le couplage avec chevauchement d'axes entre les régulateurs (8-10) concerne l'écart de réglage (ΔM) d'un régulateur de couple.

4. Dispositif de réglage (1) selon l'une quelconque des revendications précédentes, **caractérisé en ce que**, pour le couplage avec chevauchement d'axes entre les régulateurs (8-10), au moins une boucle de couplage (12) est prévue, un filtre passe-bas (15, 16), un élément de valeur absolue (13), un inverseur, un amplificateur et/ou un élément de saturation (14) étant disposés dans la boucle de couplage.

5. Dispositif de réglage (1) selon l'une quelconque des revendications précédentes, **caractérisé en ce que** le régulateur (10) d'un axe est réinjecté avec chevauchement d'axes sur les régulateurs (8, 9) de tous les autres axes.

6. Dispositif de réglage (1) selon l'une quelconque des revendications précédentes, **caractérisé en ce que** au moins l'un des régulateurs (8-10) est un régulateur en cascade qui présente plusieurs circuits de réglage en forme de cascade, le chevauchement d'axes agissant sur un ou plusieurs des circuits de réglage extérieurs.

7. Dispositif de réglage (1) selon l'une quelconque des revendications précédentes, **caractérisé en ce que** l'on peut configurer quels régulateurs (8-10) sont couplés entre eux avec le chevauchement d'axes.

8. Dispositif de réglage (1) selon l'une quelconque des revendications précédentes, **caractérisé en ce que** le comportement au couplage entre les régulateurs (8-10) individuels peut être configuré.

9. Dispositif de réglage (1) selon l'une quelconque des revendications précédentes, **caractérisé en ce que** le couplage avec chevauchement d'axes entre les régulateurs (8-10) concerne une grandeur de réglage (ΔM) enregistrée côté entraînement.

10. Robot, en particulier robot de laquage, avec un dispositif de réglage (1) selon l'une quelconque des revendications précédentes.

11. Utilisation d'un robot selon la revendication 10 dans une station de revêtement.
